# EUROPÄISCHE PATENTSCHRIFT

(11) **EP 1 836 086 B1**
(45) Veröffentlichungstag und Bekanntmachung des Hinweises auf die Patenterteilung: **22.04.2009**
(21) Anmeldenummer: 06700910.0
(22) Anmeldetag: 12.01.2006
(51) Int. Cl.: B62D 63/06, B62D 61/10

(54) **SATTELANHÄNGER UND LASTKRAFTWAGEN**
SEMI-TRAILER AND TRUCK
SEMI-REMORQUE ET POIDS LOURD

(30) Priorität: 14.01.2005 DE 102005001881
(43) Veröffentlichungstag der Anmeldung: 26.09.2007
(73) Patentinhaber: AB SKF, 415 50 Göteborg (SE)
(72) Erfinder: STEPHAN, Bernd, 97422 Schweinfurt (DE)
(74) Vertreter: Kohl, Thomas
(86) Internationale Anmeldenummer: PCT/EP2006/000214
(87) Internationale Veröffentlichungsnummer: WO 2006/074923

(56) Entgegenhaltungen:
- FR-A- 1 179 289
- GB-A- 1 499 910
- US-A- 4 423 884
- US-A- 5 082 304
- PATENT ABSTRACTS OF JAPAN Bd. 010, Nr. 109 (M-472), 23. April 1986 (1986-04-23) -& JP 60 240573 A (KOMATSU ZOUKI KK), 29. November 1985 (1985-11-29)

## Beschreibung

Die Erfindung betrifft einen Sattelanhänger und einen Lastkraftwagen.

Ein Sattelanhänger nach dem Oberbegriff des Anspruchs 1 ist aus der GB 1 499 910 bekannt. FR 1 179 289 beschreibt einen Lastkraftwagen nach dem Oberbegriff des Anspruchs 15.

Es ist bekannt, dass eine Spurrillenbildung auf Fahrbahnen vor allem durch den Schwerlastverkehr hervorgerufen wird, wobei als Spurrille eine in Fahrtrichtung verlaufende Fahrbahnvertiefung bezeichnet wird. Dabei sind Spurrillen besonders im Zusammenhang mit Aquaplaning gefährlich, weil sich in den Vertiefungen große Mengen von Regenwasser sammeln, das nicht ablaufen kann. Die Beseitigung derartiger Spurrillen, vor allem im hochrangigen Straßennetz ist dabei eine vergleichsweise kostenintensive und aufwendige Aufgabe, die vom Straßenerhalter durchzuführen ist.

Aus der GB 1 499 910 A ist ein Sattelanhänger für den Transport von Schiffscontainern bekannt, wobei der Sattelanhänger einen lasttragenden Rahmen mit einem Untergestell umfasst, das eine Vielzahl von zweirädrigen Radsätzen umfasst, die an longitudinalen Achsen montiert sind, die von einem Paar von transversalen Tragarmen getragen werden, die an longitudinalen Waagebalken montiert sind, die wiederum von Hauptwaagebalken getragen werden.

Aus der FR 1 179 289 A ist ein Fahrzeug für Regionen ohne Straßen, zum Beispiel für die Sahara bekannt. Dabei soll das Fahrzeug mit einem Sattelhänger außerhalb der Norm eine Breite von beispielsweise vier Metern aufweisen. Dabei sind beispielsweise die Räder einer Zugmaschine des Fahrzeugs in wenigstens zwei Reihen so angeordnet, dass die Räder der hinteren Reihe die von den Rädern der vorausgehenden Reihe im Gelände verursachten Furchen wenigstens teilweise wieder einebnen.

Eine Aufgabe der Erfindung ist es daher, einen Sattelanhänger zu schaffen, durch den eine Spurrillenbildung verhindert wird.

Die Aufgabe wird durch den Gegenstand des Anspruchs 1 gelöst. Vorteilhafte Ausgestaltungen sind in den Unteransprüchen beschrieben.

Gemäß Anspruch 1 umfasst ein Sattelanhänger folgende Merkmale:
- Der Sattelanhänger weist für den Transport von Waren eine im wesentlichen ebene Ladefläche für die Waren auf,
- der Sattelanhänger ist für den Warentransport auf asphaltierten oder vergleichbar befestigten Straßen hergerichtet, und
- der Sattelanhänger umfasst eine Mehrzahl von Rädern, die derart in einem sich in Fahrtrichtung des Sattelanhängers erstreckenden Abschnitt unterhalb der Ladefläche angeordnet sind, dass sich eine Fahrbahnkontaktfläche des Sattelanhängers in diesem Abschnitt im wesentlichen über eine gesamte Breite des Abschnitts erstreckt, wobei wenigstens ein Teil der Räder entlang der Breite eine erste Reihe und ein weiterer Teil der Räder eine zweite zur ersten in etwa parallelen Reihe bildend derart angeordnet sind, dass die Räder der zweiten Reihe in Fahrtrichtung gesehen Lücken zwischen den Rädern der ersten Reihe überdecken.

Die Erfindung beruht dabei auf der Erkenntnis, dass bei den bisher bekannten Sattelanhängern Räder mehr oder weniger ausschließlich in Randbereichen des Sattelanhängers angeordnet sind und insbesondere ein Bereich erheblicher Breite um eine in Fahrtrichtung verlaufende Mittenachse herum frei von Rädern ist, was - wie eingangs beschrieben - zu der bekannten Spurrillenbildung führe. Auch der bereits bekannte Einsatz von Zwillings- bzw. Mehrlingsrädern beseitigt das Problem der Spurrillenbildung nicht, sondern führt lediglich zu einer Verbreiterung besagter Spurrillen. Demgegenüber wird durch den Gegenstand unserer Erfindung gemäß Anspruch 1 eine Ausbildung von zwei parallel verlaufenden Spurrillen je Fahrspur gänzlich verhindert und eine flächenbezogene Fahrbahnbelastung durch das Gewicht des Sattelanhängers verringert, was mit Vorteil unter anderem zu einer deutlichen Lebensdauererhöhung der Fahrbahn führt und ein aufwendiges Beseitigen von Spurrillen überflüssig macht.

In einer vorteilhaften Ausgestaltung sind wenigstens zwei der Räder in Form eines Radsatzes angeordnet, bei dem eine Verbindung mit dem übrigen Sattelanhänger zwischen den beiden Rädern angreifend angeordnet ist. Dadurch ist mit Vorteil eine kompakte und auf eine geringe Baubreite beschränkte Anbindung von Rädern mit dem übrigen Sattelanhänger realisierbar, wobei hinsichtlich der technischen Ausbildung derartiger Radsätze Anleihen aus dem Flugzeugfahrwerksbau hergenommen werden können, bei dem derartige Radsätze seit langem bekannt sind.

In einer vorteilhaften Ausgestaltung sind die beiden Räder des Radsatzes entlang einer gemeinsamen Achse angeordnet und mit einem gemeinsamen Radlager mit drehender Welle und einer gemeinsamen Bremse ausgebildet. Gegenüber zwei einzeln gelagerten Rädern, von denen jedem eine separate Bremseinrichtung zugeordnet ist, wird eine deutliche Ersparnis an Material und damit auch an Kosten erzielt, da lediglich ein Lager und lediglich eine Bremseinrichtung für beide Räder des Radsatzes vorzusehen sind.

In einer weiteren vorteilhaften Ausgestaltung ist die Verbindung des Radsatzes über eine Feder-Dämpfer-Einheit am übrigen Sattelanhänger angebunden. Insbesondere bei Radsätzen mit vier und mehr Rädern werden dadurch gegenüber bekannten Radaufhängungen Einsparungen hinsichtlich einer Anzahl an Federn und Dämpfern und damit entsprechende Kosteneinsparungen erzielt. Die Feder-Dämpfer-Einheit kann dabei umfassend eine Luftfeder und einen Stoßdämpfer ausgebildet sein.

In einer weiteren vorteilhaften Ausgestaltung sind wenigstens ein Teil der Räder und/oder wenigstens einer der Radsätze ein- und ausfahrbar ausgebildet. Durch diese an sich bekannte Möglichkeit des Liftens wird insbesondere bei Leerfahrten des Lastkraftwagens mit Vorteil ein Verschleiß und ein Rollwiderstand reduziert.

In einer weiteren vorteilhaften Ausgestaltung ist bei dem Radsatz die Verbindung drehbar oder lenkbar am übrigen Sattelanhänger angeordnet. Dadurch wird eine verbesserte und fahrbahnschonendere Kurvengängigkeit erzielt, was insbesondere bei Kreisverkehren kleinen Durchmessers von besonderem Vorteil ist. Weiterhin wird dadurch einem enormen Anstieg des Rollwiderstands bei Kurvenfahrten, einem zusätzlichen Verschleiß der Reifen und einer zusätzlichen Belastung der Fahrwerksteile, wie sie bei nicht dreh- oder lenkbaren Rädern auftreten, entgegengewirkt.

Weitere Vorteile, Merkmale und Einzelheiten ergeben sich aus den im folgenden beschriebenen Ausführungsbeispielen anhand der Figuren. Dabei zeigen:
- Figur 1: einen hinteren Bereich eines Sattelanhängers eines Lastkraftwagens mit zwei Radsätzen mit je vier Zwillingsreifen und
- Figur 2: einen hinteren Bereich eines Sattelanhängers eines Lastkraftwagens mit in Fahrtrichtung versetzt angeordneten Radsätzen.

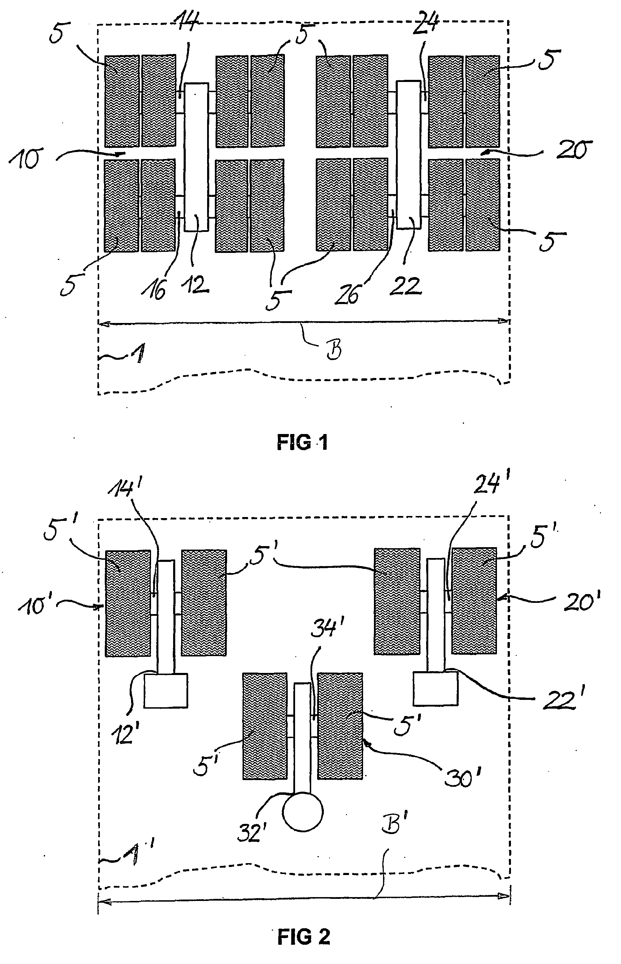

Die Figur 1 zeigt als ein Ausführungsbeispiel einen hinteren Bereich eines Sattelanhängers 1 eines Lastkraftwagens, bei dem die Räder 5 derart angeordnet sind, dass sich eine Fahrbahnkontaktfläche des Sattelanhängers 1 im wesentlichen über die gesamte Breite B des Sattelanhängers 1 erstreckt. Die Räder 5 sind als Zwillingsräder ausgebildet und in Form zweier Radsätze 10 und 20 angeordnet, wobei bei jedem der beiden Radsätze 10 und 20 eine Verbindung 12 und 22 mit dem übrigen Sattelanhänger 1 zwischen den Rädern 5 angreifend angeordnet ist. Jeder der Radsätze 10 und 20 umfasst zwei Achsen 14 und 16 sowie 24 und 26, wobei je Achse 14, 16, 24 und 26 beiderseits der Verbindung 12 und 22 ein Rad 5 angeordnet ist. Damit ist die Kontaktfläche zwischen Rädern 5 und Fahrbahn über die gesamte Breite B des Sattelanhängers 1 hinweg im wesentlichen gleichmäßig verteilt und nur zwischen den einzelnen Rädern 5 durch mehrere über die Breite B im wesentlichen gleich verteilte Lücken unterbrochen.

In anderen Ausführungsformen können anstatt der Zwillingsräder auch Mehrlingsräder höherer Ordnung oder einfache Räder eingesetzt werden. In wiederum anderen Ausführungsformen können die Radsätze mehr als zwei Achsen aufweisen und/oder die einzelnen Achsen der Radsätze sind unabhängig voneinander einzeln mit dem übrigen Sattelanhänger verbunden. In wiederum anderen Ausführungsformen können auch zwei einachsige Radsätze eingesetzt werden und/oder es sind mehr als zwei Radsätze nebeneinander angeordnet.

Die Figur 2 zeigt als ein weiteres Ausführungsbeispiel einen hinteren Bereich eines Sattelanhängers 1' eines Lastkraftwagens, bei dem eine Mehrzahl von Rädern 5' derart angeordnet ist, dass sich eine Fahrbahnkontaktfläche des Sattelanhängers 1' im wesentlichen über eine gesamte Breite B' des Sattelanhängers 1' erstreckt. Dabei sind die Räder 5' in Form dreier Radsätze 10', 20' und 30' angeordnet, wobei bei jedem der Radsätze 10', 20' und 30' eine Verbindung 12', 22' und 32' mit dem übrigen Sattelanhänger 1 zwischen den jeweils zwei, auf einer gemeinsamen Achse 14', 24' und 34' angeordneten Rädern 5' angreifend angeordnet ist. Die beiden äußeren Radsätze 10' und 20' sind auf gleicher Höhe angeordnet und fest mit dem übrigen Sattelanhänger 1' verbunden. Dahingegen ist der mittlere Radsatz 30' in Fahrtrichtung bezüglich der beiden äußeren Radsätze 10' und 20' versetzt angeordnet und lenkbar mit dem übrigen Sattelanhänger 1' verbunden, wodurch eine verbesserte und fahrbahnschonende Kurvengängigkeit erzielt wird, was insbesondere bei Kreisverkehren kleinen Durchmessers von besonderem Vorteil ist.

In anderen Ausführungsformen sind mehrere der Radsätze der Figur 2 lenkbar und/oder drehbar ausgebildet. In wiederum anderen Ausführungsformen sind die Radsätze der Figur 2 frei von einem Versatz angeordnet und/oder vergleichbar denen der Figur 1 und den dazu beschriebenen Ausführungsformen ausgebildet.

### Bezugszeichenliste

- 1, 1': Sattelanhänger
- 5, 5': Rad

- 10, 10', 20, 20', 30': Radsatz
- 12, 12', 22, 22', 32': Verbindung

- 14, 14', 16, 22, 22', 24, 32': Achse

- B, B': Breite

## Patentansprüche

1. Sattelanhänger (1, 1 '), beinhaltend folgende Merkmale:
- Der Sattelanhänger (1, 1') weist für den Transport von Waren eine im Wesentlichen ebene Ladefläche für die Waren auf,
- der Sattelanhänger (1, 1') ist für den Warentransport auf asphaltierten oder vergleichbar befestigten Straßen hergerichtet, und
- der Sattelanhänger (1, 1') umfasst eine Mehrzahl von Rädern (5, 5'), die derart in einem sich in Fahrtrichtung des Sattelanhängers (1, 1') erstreckenden Abschnitt unterhalb der Ladefläche angeordnet sind, dass sich eine Fahrbahnkontaktfläche des Sattelanhängers (1, 1') in diesem Abschnitt im wesentlichen über eine gesamte Breite (B, B') des Abschnitts erstreckt,
**dadurch gekennzeichnet, dass** wenigstens ein Teil der Räder (5, 5') entlang der Breite (B, B') eine erste Reihe und ein weiterer Teil der Räder (5, 5') eine zweite zur ersten in etwa parallelen Reihe bildend derart angeordnet sind, dass die Räder (5, 5') der zweiten Reihe in Fahrtrichtung gesehen Lücken zwischen den Rädern (5, 5') der ersten Reihe überdecken.

2. Sattelanhänger (1, 1') nach Anspruch 1, wobei wenigstens zwei der Räder (5, 5') in Form eines Radsatzes (10, 10', 20, 20', 30, 30') angeordnet sind, bei ' dem eine Verbindung (12, 12', 22, 22', 32') mit dem übrigen Sattelanhänger (1, 1') zwischen den beiden Rädern (5, 5') angreifend angeordnet ist.

3. Sattelanhänger (1, 1') nach Anspruch 2, wobei die beiden Räder (5, 5') auf einer ersten gemeinsamen Achse (14, 14', 16, 24, 24', 26, 34') angeordnet sind.

4. Sattelanhänger (1, 1') nach Anspruch 3, wobei den beiden Rädern (5, 5') ein gemeinsames Radlager mit drehender Welle und eine gemeinsame Bremse zugeordnet sind.

5. Sattelanhänger (1) nach einem der Ansprüche 3 oder 4, wobei der Radsatz (10, 20) wenigstens zwei weitere, beiderseits der Verbindung (12, 22) angeordnete, auf einer zweiten gemeinsamen, zur ersten parallelen Achse (14, 16, 24, 26) angeordnete Räder (5) umfasst.

6. Sattelanhänger (1) nach Anspruch 5, wobei die Räder (5) der ersten und zweiten Achse (14, 16, 24, 26) in Fahrtrichtung fluchtend hintereinander angeordnet sind.

7. Sattelanhänger (1, 1') nach einem der Ansprüche 1 bis 6, wobei wenigstens eines der Räder (5, 5') als Zwillingsrad oder Mehrlingsrad höherer Ordnung ausgebildet ist.

8. Sattelanhänger (1, 1') nach einem der Ansprüche 2 bis 7, wobei die Verbindung (12, 22, 32') des Radsatzes (10, 20, 30, 30') drehbar oder lenkbar am übrigen Sattelanhänger (1, 1') angeordnet ist.

9. Sattelanhänger (1, 1') nach einem der Ansprüche 2 bis 8, wobei die Verbindung (12, 12', 22, 22', 32') über eine Feder-Dämpfer-Einheit mit dem übrigen Sattelanhänger (1, 1') verbunden ist.

10. Sattelanhänger (1, 1') nach einem der Ansprüche 2 bis 9, wobei wenigstens zwei Radsätze (10, 10', 20, 20') entlang der Breite (B, B') nebeneinander angeordnet sind.

11. Sattelanhänger (1') nach einem der Ansprüche 2 bis 10, wobei entlang der Breite (B') drei Radsätze (10', 20', 30') nebeneinander angeordnet sind.

12. Sattelanhänger (1, 1') nach einem der Ansprüche 1 bis 11, wobei wenigstens ein Teil der Räder (5, 5') und/oder wenigstens einer der Radsätze (10, 10', 20, 20', 30, 30') ein- und ausfahrbar ausgebildet sind.

13. Sattelanhänger (1, 1') nach einem der Ansprüche 1 bis 12, wobei der Sattelanhänger (1, 1') derart ausgebildet ist, dass seine Außenabmessung eine Länge von ca. 17 m, eine Höhe von ca. 4 m und eine Breite (B, B') von ca. 2,6 m nicht überschreiten.

14. Sattelanhänger (1, 1') nach einem der Ansprüche 1 bis 13, wobei der gezogene und beladene Sattelanhänger (1, 1') für ein zulässiges Gesamtgewicht von kleiner in etwa 45 t ausgebildet ist.

15. Lastkraftwagen, der für den Transport von Waren auf asphaltierten oder vergleichbar befestigten Straßen hergerichtet ist, mit wenigstens einem sich in Fahrtrichtung erstreckenden Abschnitt mit einer Mehrzahl von Rädern (5, 5'), wobei wenigstens ein Teil der Räder (5, 5') entlang einer Breite (B, B') des Abschnitts eine erste Reihe und ein weiterer Teil der Räder (5, 5') eine zweite zur ersten in etwa parallelen Reihe bildend angeordnet sind, **dadurch gekennzeichnet, dass** die Räder (5, 5') derart angeordnet sind, dass die Räder (5, 5') der zweiten Reihe in Fahrtrichtung gesehen Lücken zwischen den Rädern (5, 5') der ersten Reihe überdecken, so dass sich eine Fahrbahnkontaktfläche des Lastkraftwagens in diesem Abschnitt über eine gesamte Breite (B, B') des Abschnitts erstreckt.

16. Lastkraftwagen nach Anspruch 15, wobei der Abschnitt einer Zugmaschine des Lastkraftwagens, insbesondere im Bereich der angetriebenen Räder, zugehört.

## Claims

1. Semitrailer (1, 1'), containing the following features:
- For the transportation of goods, the semitrailer (1, 1') has a substantially planar loading surface for the goods,
- the semitrailer (1, 1') is prepared for transportation of goods on asphalted or comparably paved roads, and
- the semitrailer (1, 1') comprises a plurality of wheels (5, 5') which are arranged below the loading surface, in a section extending in the direction of travel of the semitrailer (1, 1') , in such a manner that a carriageway contact surface of the semitrailer (1, 1') in said section extends substantially over an entire width (B, B') of the section,
**characterized in that**, at least some of the wheels (5, 5') are arranged along the width (B, B'), forming a first row, and a further number of the wheels (5, 5') is arranged forming a second row, which is approximately parallel to the first row, in such a manner that the wheels (5, 5') of the second row cover gaps, as seen in the direction of travel, between the wheels (5, 5') of the first row.

2. Semitrailer (1, 1') according to Claim 1, wherein at least two of the wheels (5, 5') are arranged in the form of a wheel set (10, 10', 20, 20', 30, 30') , in which a connection (12, 12', 22, 22', 32') to the rest of the semitrailer (1, 1') is arranged such that it acts between the two wheels (5, 5') .

3. Semitrailer (1, 1') according to Claim 2, wherein the two wheels (5, 5') are arranged on a first common axle (14, 14', 16, 24, 24', 26, 34').

4. Semitrailer (1, 1') according to Claim 3, wherein a common wheel bearing with a rotating shaft, and a common break are assigned to the two wheels (5, 5').

5. Semitrailer (1) according to either of Claims 3 and 4, wherein the wheel set (10, 20) comprises at least two further wheels (5) which are arranged on broth sides of the connection (12, 22) and are arranged on a second common axle (14, 16, 24, 26) parallel to the first axle.

6. Semitrailer (1) according to Claim 5, wherein the wheels (5) of the first and second axles (14, 16, 24, 26) are aligned one behind another in the direction of travel.

7. Semitrailer (1, 1') according to one of Claims 1 to 6, wherein at least one of the wheels (5, 5') is designed as a twin wheel or multiple wheel having a greater number of wheels.

8. Semitrailer (1, 1') according to one of Claims 2 to 7, wherein the connection (12, 22, 32') of the wheel set (10, 20, 30, 30') is arranged rotatably or steerably on the rest of the semitrailer (1, 1').

9. Semitrailer (1, 1') according to one of Claims 2 to 8, wherein the connection (12, 12', 22, 22', 32') is connected to the rest of the semitrailer (1, 1') via a spring/damper unit.

10. Semitrailer (1, 1') according to one of Claims 2 to 9, wherein at least two wheel sets (10, 10', 20, 20') are arranged next to one another along the width (B, B').

11. Semitrailer (1') according to one of Claims 2 to 10, wherein three wheel sets (10', 20', 30') are arranged next to one another along the width (B').

12. Semitrailer (1, 1') according to one of Claims 1 to 11, wherein at least some of the wheels (5, 5') and/or at least one of the wheel sets (10, 10', 20, 20', 30, 30') are/is of retractable and extendable design.

13. Semitrailer (1, 1') according to one of Claims 1 to 12, wherein the semitrailer (1, 1') is designed in such a manner that its external dimensions do not exceed a length of approx. 17 m, a height of approx. 4 m and a width (B, B') of approx. 2.6 m.

14. Semitrailer (1, 1') according to one of Claims 1 to 13, wherein the towed and loaded semitrailer (1, 1') is designed for a permissible overall weight of less than approximately 45 t.

15. Lorry which is prepared for the transportation of goods on asphalted or comparably paved roads, with at least one section which extends in the direction of travel and has a plurality of wheels (5, 5'), wherein at least some of the wheels (5, 5') are arranged along a width (B, B') of the section, forming a first row, and a further number of the wheels (5, 5') is arranged forming a second row, which is approximately parallel to the first row, **characterized in that** the wheels (5, 5') are arranged in such a manner that the wheels (5, 5') of the second row cover gaps, as seen in the direction of travel, between the wheels (5, 5') of the first row such that a carriageway contact surface of the lorry in this section extends over an entire width (B, B') of the section.

16. Lorry according to Claim 15, wherein the section belongs to a tractor of the lorry, in particular in the region of the driven wheels.

## Revendications

1. Semi-remorque (1, 1'), comportant les caractéristiques suivantes:
- Le semi-remorque (1, 1') présente, pour le transport de marchandises, un plateau de chargement essentiellement plan pour les marchandises,
- le semi-remorque (1, 1' est agencé pour le transport de marchandises sur des routes asphaltées ou consolidées de manière comparable, et
- le semi-remorque (1, 1') comporte une pluralité de roues (5, 5'), qui sont disposées en dessous du plateau de chargement, dans une partie qui s'étend dans la direction de déplacement du semi-remorque (1, 1'), de telle manière qu'une surface de contact du semi-remorque (1, 1') avec la chaussée s'étende dans cette partie essentiellement sur une largeur totale (B, B') de la partie,
**caractérisé en ce qu'**au moins une partie des roues (5, 5') sont disposées selon la largeur (B, B') en formant une première rangée et une autre partie des roues (5, 5') sont disposées en formant une deuxième rangée sensiblement parallèle à la première rangée, de telle manière que les roues (5, 5') de la deuxième rangée, vues dans la direction de déplacement, comblent les espaces entre les roues (5, 5') de la première rangée.

2. Semi-remorque (1, 1') selon la revendication 1, dans lequel au moins deux des roues (5, 5') sont disposées en forme de train de roues (10, 10', 20, 20', 30, 30'), dans lequel une liaison (12, 12', 22, 22', 32') avec le reste du semi-remorque (1, 1') est disposée en attache entre les deux roues (5, 5').

3. Semi-remorque (1, 1') selon la revendication 2, dans lequel les deux roues (5, 5') sont disposées sur un premier essieu commun (14, 14', 16, 24, 24', 26, 34').

4. Semi-remorque (1, 1') selon la revendication 3, dans lequel un palier de roue commun avec un arbre rotatif et un frein commun sont associés aux deux roues (5, 5').

5. Semi-remorque (1) selon l'une quelconque des revendications 3 ou 4, dans lequel le train de roues (10, 20) comprend au moins deux autres roues (5) disposées sur un deuxième essieu commun (14, 16, 24, 26) parallèle au premier et disposées de part et d'autre de la liaison (12, 22).

6. Semi-remorque (1) selon la revendication 5, dans lequel les roues (5) du premier et du deuxième essieux (14, 16, 24, 26) sont disposées l'une derrière l'autre en alignement dans la direction de déplacement.

7. Semi-remorque (1, 1') selon l'une quelconque des revendications 1 à 6, dans lequel au moins une des roues (5, 5') est constituée par des roues jumelées ou par des roues multiples d'ordre plus élevé.

8. Semi-remorque (1, 1') selon l'une quelconque des revendications 2 à 7, dans lequel la liaison (12, 22, 32') du train de roues (10, 20, 30, 30') est disposée de manière rotative ou orientable sur le reste du semi-remorque (1, 1').

9. Semi-remorque (1, 1') selon l'une quelconque des revendications 2 à 8, dans lequel la liaison (12, 12', 22, 22', 32') est reliée au reste du semi-remorque (1, 1') au moyen d'une unité d'amortisseur à ressort.

10. Semi-remorque (1, 1') selon l'une quelconque des revendications 2 à 9, dans lequel au moins deux trains de roues (10, 10', 20, 20') sont disposés l'un à côté de l'autre selon la largeur (B, B').

11. Semi-remorque (1') selon l'une quelconque des revendications 2 à 10, dans lequel trois trains de roues (10', 20', 30') sont disposés l'un à côté de l'autre selon la largeur (B, B').

12. Semi-remorque (1, 1') selon l'une quelconque des revendications 1 à 11, dans lequel au moins une partie des roues (5, 5') et/ou au moins un des trains de roues (10, 10', 20, 20', 30, 30') sont réalisées / est réalisé sous forme rétractable et extensible.

13. Semi-remorque (1, 1') selon l'une quelconque des revendications 1 à 12, dans lequel le semi-remorque (1, 1') est réalisé de telle manière que ses dimensions extérieures ne dépassent par une longueur d'environ 17 m, une hauteur d'environ 4 m et une largeur (B, B') d'environ 2,6 m.

14. Semi-remorque (1, 1') selon l'une quelconque des revendications 1 à 13, dans lequel le semi-remorque (1, 1') étiré et chargé est réalisé pour un poids total admissible de moins d'environ 45 t.

15. Camion, qui est agencé pour le transport de marchandises sur des routes asphaltées ou consolidées de manière comparable, avec au moins une partie s'étendant dans la direction de déplacement et comportant une pluralité de roues (5, 5'), dans lequel au moins une partie des roues (5, 5') sont disposées selon une largeur (B, B') de la partie en formant une première rangée et une autre partie des roues (5, 5') sont disposées en formant une deuxième rangée sensiblement parallèle à la première rangée, **caractérisé en ce que** les roues (5, 5') sont disposées de telle manière que les roues (5, 5') de la deuxième rangée, vues dans la direction de déplacement, comblent les espaces entre les roues (5, 5') de la première rangée, de telle façon qu'une surface de contact du camion avec la chaussée s'étende dans cette partie essentiellement sur une largeur totale (B, B') de la partie.

16. Camion selon la revendication 15, dans lequel la partie fait partie d'un tracteur du camion, en particulier dans la région des roues motrices.
